# EUROPÄISCHE PATENTSCHRIFT

(11) **EP 0 846 242 B1**
(45) Veröffentlichungstag und Bekanntmachung des Hinweises auf die Patenterteilung: **05.04.2000**
(21) Anmeldenummer: 96934349.0
(22) Anmeldetag: 08.08.1996
(51) Int. Cl.: F22B 31/04, F23C 6/04

(54) **Dampferzeuger und Verfahren zu dessen Betrieb**
Steam generator and method of operating it
Générateur de vapeur et procédé de son exploitation

(30) Priorität: 23.08.1995 DE 19531027
(43) Veröffentlichungstag der Anmeldung: 10.06.1998
(73) Patentinhaber: SIEMENS AKTIENGESELLSCHAFT, 80333 München (DE)
(72) Erfinder: BAUER, Günter, D-91074 Herzogenaurach (DE)
(86) Internationale Anmeldenummer: DE9601490
(87) Internationale Veröffentlichungsnummer: WO9708492

(56) Entgegenhaltungen:
- EP-A- 0 206 340
- US-A- 2 239 341
- US-A- 3 884 193

## Beschreibung

Die Erfindung betrifft einen Dampferzeuger mit einer Brennkammer zur Erzeugung eines Arbeitsmittels durch Verbrennung eines Brennstoffs und ein Verfahren zum Betreiben des Dampferzeugers.

In einer fossil befeuerten Dampfkraftanlage wird der Energieinhalt eines Brennstoffs in eine technologisch nutzbare Energieform umgewandelt. Dabei wird durch Verbrennung des Brennstoffs ein heißes Gas als Arbeitsmittel erzeugt, dessen Wärmeinhalt genutzt wird, um in einem Verdampfer Wasser ganz oder teilweise zu verdampfen und/oder zu überhitzen. Der so entstandene Dampf wird einer Dampfturbine zugeleitet, wo er sich entspannt und dabei Energie auf ein Generatorsystem überträgt.

Als Brennstoff werden dabei insbesondere die fossilen Energieträger Heizöl, Erdgas oder auch Kohle herangezogen. Diesen Brennstoffen ist gemeinsam, daß sie bei ihrer Verbrennung Kohlendioxid (CO₂) freisetzen. Der dabei umgewandelte Kohlenstoff war vor der Verbrennung für geraume Zeit im Brennstoff gebunden und somit dem Kohlendioxid-Haushalt der Erdatmosphäre entzogen. Die Verbrennung dieser Brennstoffe trägt somit zu einer Anhebung des aktuellen globalen CO₂-Niveaus bei. Insbesondere auch im Hinblick auf den dadurch bedingten Treibhauseffekt, d.h. eine kontinuierliche Erwärmung der Erdatmosphäre, ist es von besonderer Bedeutung, bei der Dampferzeugung regenerierbare Energieträger oder Energieträger mit vergleichsweise kurzem Kohlendioxidzyklus, wie beispielsweise Biomasse, einzusetzen. Zwar wird bei der Verbrennung von Biomasse, wie beispielsweise Stroh, ebenfalls Kohlendioxid (CO₂) an die Atmosphäre abgegeben; der diesem zugrundeliegende Kohlenstoff wurde jedoch im allgemeinen nur kurzzeitig vorher in die Biomasse eingebaut, so daß die Verbrennung der Biomasse keinen nennenswerten Anstieg des durchschnittlichen Kohlendioxidniveaus zur Folge hat.

Daher hat sich insbesondere Stroh als Biomasse als besonders attraktiver Brennstoff für eine Dampferzeugung erwiesen. Bei der Auslegung eines Dampferzeugers für Stroh als Brennstoff erweist es sich jedoch als problematisch, daß bei Dampftemperaturen oberhalb von etwa 470 °C aufgrund von im Stroh enthaltenen Materialien, wie beispielsweise Chlor oder Kalium, eine verstärkte Korrosion der metallischen Heizflächen des Dampferzeugers einsetzt. Um einen Dampferzeuger mit für einen wirtschaftlichen Betrieb ausreichend hohem Wirkungsgrad betreiben zu können, sind jedoch Dampftemperaturen von mehr als 500 °C erforderlich.

Ein Dampferzeuger mit einer ersten Brennkammer zur Erzeugung eines Arbeitsmittels durch Verbrennung eines ersten Brennstoffs und mit einer zweiten Brennkammer zur Verbrennung von Biomasse als Brennstoff ist jeweils aus der EP-A-0 206 340 und aus der US-A-3 884 193 bekannt. Bei diesen Dampferzeugern ist die zweite Brennkammer der ersten Brennkammer in Strömungsrichtung des Arbeitsmittels jeweils nachgeschaltet.

Der Erfindung liegt daher die Aufgabe zugrunde, einen Dampferzeuger anzugeben, mit dem bei der Verwendung von Biomasse als Brennstoff ein hoher Wirkungsgrad erreichbar ist, ohne daß eine verstärkte Korrosion einsetzt. Außerdem soll ein Verfahren zum Betreiben des Dampferzeugers angegeben werden, bei dem zuverlässig eine verstärkte Korrosion vermieden ist.

Diese Aufgabe wird erfindungsgemäß gelöst durch einen Dampferzeuger mit einer ersten Brennkammer zur Erzeugung eines Arbeitsmittels durch Verbrennung eines ersten Brennstoffs und mit einer zweiten Brennkammer zur Verbrennung eines zweiten Brennstoffs, die in Strömungsrichtung des Arbeitsmittels der ersten Brennkammer nachgeschaltet ist, und wobei eine erste Überhitzerheizfläche im Rauchgasbereich der zweiten Brennkammer und eine der ersten Überhitzerheizfläche nachgeschaltete zweite Überhitzerheizfläche im Rauchgasbereich der ersten Brennkammer angeordnet ist.

Ein derartiger Dampferzeuger ist besonders flexibel an variierende Erfordernisse beim Einsatz unterschiedlicher Brennstoff typen anpaßbar. Erst dadurch ist gewährleistet, daß den besonderen Erfordernissen bei der Verbrennung von Biomasse zur Vermeidung von Korrosion an den Heizflächen des Dampferzeugers Rechnung getragen werden kann, wobei dennoch ein für einen hohen Wirkungsgrad erforderliches hohes Temperaturniveau im Dampferzeuger erreichbar ist. Um das für einen hohen Wirkungsgrad erforderliche hohe Dampftemperaturniveau besonders zuverlässig zu gewährleisten, sind dabei die Überhitzerheizflächen vorgesehen. Die Betriebsparamter des Dampferzeugers sind insbesondere durch die Überhitzerheizflächen besonders flexibel an das Rauchgastemperaturniveau der ersten und der zweiten Brennkammer anpaßbar.

In besonders vorteilhafter Ausgestaltung ist dabei der ersten Brennkammer Kohle, insbesondere Steinkohle, und/oder der zweiten Brennkammer Biomasse, insbesondere Stroh, als Brennstoff zuführbar. Dadurch ist gewährleistet, daß im Bereich der ersten Brennkammer eine für einen hohen Wirkungsgrad erforderliche Dampftemperatur von beispielsweise mehr als 550 °C erreichbar ist, wobei im Bereich der zweiten, mit Biomasse gefeuerten Brennkammer zur Vermeidung von Hochtemperaturkorrosion die Dampftemperatur weniger als etwa 470 °C beträgt. Auf diese Weise ist die Biomasse, insbesondere das Stroh, als Hauptbrennstoff zur Erzeugung einer Dampftemperatur von etwa 470 °C nutzbar, wobei durch die Kohlefeuerung lediglich in der Art einer Zusatzfeuerung das Dampftemperaturniveau von etwa 470 °C auf mehr als 550 °C angehoben wird.

Um einen besonders günstigen Wärmeübertrag bei der Dampferzeugung sicherzustellen, umfassen die Außenwände des Dampferzeugers zweckmäßigerweise eine Anzahl von Dampferzeugerrohren. Je nach Betriebsdruck kann der Dampferzeuger dabei als Zwangsdurchlaufdampferzeuger, als Zwangsumlaufdampferzeuger oder als Naturumlaufdampferzeuger ausgelegt sein.

Für eine weitere Wirkungsgradverbesserung ist zweckmäßigerweise in eine an die erste und/oder die zweite Brennkammer angeschlossene Luftzuführungsleitung ein Wärmetauscher zur Luftvorwärmung durch Wärmetausch mit bei der Verbrennung erzeugtem Rauchgas geschaltet.

Bezüglich des Verfahrens wird die genannte Aufgabe gelöst dadurch, daß die Temperatur des in der ersten Überhitzerheizfläche erzeugten Dampfs. ein Maximum von etwa 470° nicht übersteigt. Hierdurch ist gewährleistet, daß eine Hochtemperaturkorrosion auch bei Verwendung von Biomasse als zweitem Brennstoff nicht auftritt.

Vorteilhafterweise wird der Dampferzeuger so betrieben, daß der ersten Brennkammer überstöchiometrisch Verbrennungsluft zugeführt wird. Dazu wird die erste Brennkammer zweckmäßigerweise mit Luftüberschuß, insbesondere mit einem Luftüberschußverhältnis der tatsächlich zugeführten Luftmenge zu der für eine stöchiometrische Verbrennung benötigten Luftmenge von etwa 2,5, betrieben. Beim Betrieb der ersten Brennkammer mit Luftüberschuß kann zudem die Rauchgastemperatur des Arbeitsmittels auf etwa 1050 °C gesenkt sein, so daß eine Ascheerweichung und eine daraus resultierende Heizflächenverschmutzung vermieden sind. Dabei dient für einen besonders hohen Wirkungsgrad des Dampferzeugers das in der ersten Brennkammer erzeugte Arbeitsmittel in der zweiten Brennkammer als Verbrennungsluft.

Die mit der Erfindung erzielten Vorteile bestehen insbesondere darin, daß durch die arbeitsmittelseitige Nachschaltung der zweiten Brennkammer hinter die erste Brennkammer Biomasse als Hauptbrennstoff einsetzbar ist, wobei unter Vermeidung von Hochtemperaturkorrosion an Heizflächen dennoch ein hoher Wirkungsgrad des Dampferzeugers sichergestellt ist. Zudem gewährleistet die Verwendung von Steinkohle als Zusatzbrennstoff, insbesondere auch im Vergleich zu alternativen Zusatzbrennstoffen, wie beispielsweise den Edelbrennstoffen Heizöl oder Erdgas, einen wirtschaftlichen Betrieb eines derartigen Dampferzeugers.

Ein Ausführungsbeispiel der Erfindung wird anhand einer Zeichnung näher erläutert.

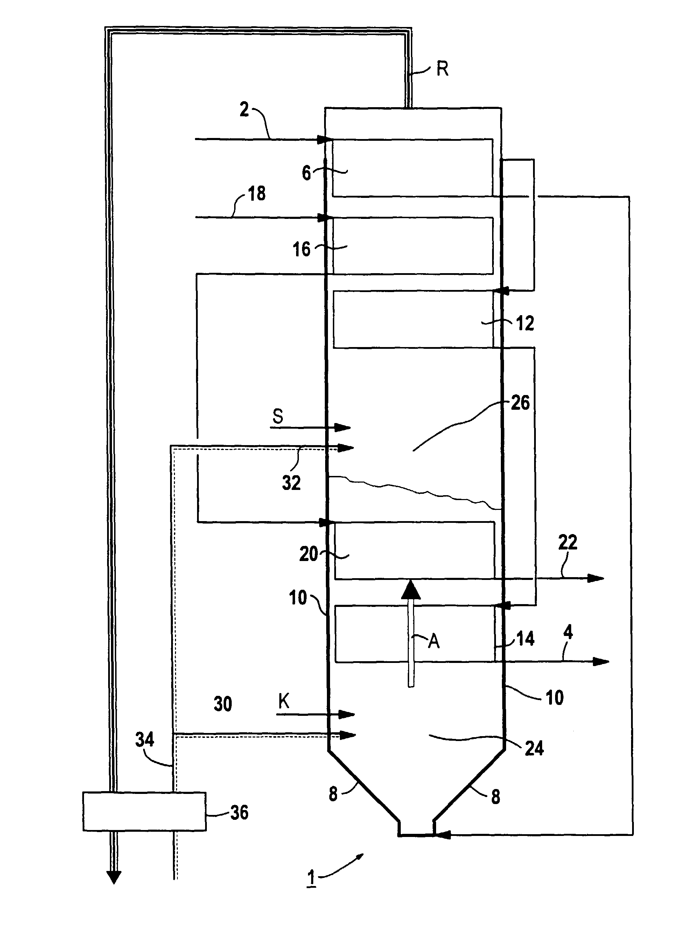

Darin zeigt die Figur einen Dampferzeuger.

Der Dampferzeuger 1 gemäß der Figur ist über seine Speisewasserzuführung 2 und über seinen dampfseitigen Ausgang 4 in den Wasser-Dampf-Kreislauf einer nicht dargestellten Dampfturbine geschaltet. Dazu ist die Speisewasserzuführung 2 über einen Vorwärmer oder Economizer 6 an eine Anzahl von Dampferzeugerrohren 8 angeschlossen, die Teil der Außenwände 10 des Dampferzeugers 1 sind. Die Dampferzeugerrohre 8 sind ausgangsseitig an einen ersten Hochdrucküberhitzer 12 angeschlossen. Dieser ist ausgangsseitig mit einem zweiten Hochdrucküberhitzer 14 verbunden, der in den dampfseitigen Ausgang 4 des Dampferzeugers 1 mündet.

Für eine Dampfturbine mit mehreren Druckstufen ist im Dampferzeuger 1 zusätzlich ein erster Zwischenüberhitzer 16 angeordnet. Dieser ist eingangsseitig an einen Dampfeinlaß 18 und ausgangsseitig an einen ebenfalls im Dampferzeuger 1 angeordneten zweiten Zwischenüberhitzer 20 angeschlossen, der in einen Dampfauslaß 22 mündet. Je nach Auslegung der Dampfturbine können der Dampfeinlaß 18 beispielsweise an den Dampfausgang eines ersten oder Hochdruckteils der Dampfturbine und der Dampfauslaß 22 an den Dampfeingang eines zweiten oder Mittel- oder Niederdruckteils der Dampfturbine angeschlossen sein.

Der Dampferzeuger 1 umfaßt eine erste Brennkammer 24 zur Erzeugung eines Arbeitsmittels A durch Verbrennung eines ersten Brennstoffs K. Der erste Brennstoff K ist dabei vorzugsweise Kohle, insbesondere Steinkohle. Weiterhin umfaßt der Dampferzeuger 1 eine der ersten Brennkammer 24 in Strömungsrichtung des Arbeitsmittels A nachgeordnete oder nachgeschaltete zweite Brennkammer 26 zur Verbrennung eines zweiten Brennstoffs S. Letzterer ist dabei vorzugsweise Biomasse, insbesondere Stroh. Die Anordnung der Brennkammern 24 und 26 ist dabei derart, daß der zweite Hochdrucküberhitzer 14 und der zweite Zwischenüberhitzer 20 im Rauchgasbereich der ersten Brennkammer 24 angeordnet sind, und daß der erste Hochdrucküberhitzer 12 und der erste Zwischenüberhitzer 16 im Rauchgaskanal der zweiten Brennkammer 26 angeordnet sind.

Eine an die erste Brennkammer 24 angeschlossene Luftzuführungsleitung 30 ist, ebenso wie eine an die zweite Brennkammer 26 angeschlossene Luftzuführungsleitung 32, von einer gemeinsamen Luftzuführungsleitung 34 gespeist. Die Luftzuführungsleitung 34 ist in die Sekundärseite eines Wärmetauschers 36 geschaltet. Diese ist primärseitig in den Abgasstrom von bei der Verbrennung erzeugtem Abgas oder Rauchgas R geschaltet. Der Wärmetauscher 36 dient somit als Luftvorwärmer.

Bei einem Betrieb des Dampferzeugers 1 wird der ersten Brennkammer 24 als Brennstoff K Steinkohle zugeführt. Um eine Ascheerweichung und eine daraus resultierende Heizflächenverschmutzung zu vermeiden, erfolgt die Verbrennung des Brennstoffs K derart, daß die Temperatur des bei der Verbrennung erzeugten Arbeitsmittels A im Bereich des zweiten Hochdrucküberhitzers 14 etwa 1050 °C beträgt. Dazu wird der Brennstoff K in der 1. Brennkammer 24 unter Luftüberschuß, insbesondere bei einem Luftüberschußverhältnis von etwa 2,5, betrieben. Ein Teil des Wärmeinhalts des Arbeitsmittels A wird über die Dampferzeugerrohre 8 auf ein diese durchströmendes Wasser/Dampf-Gemisch übertragen. Ein weiterer Teil des Wärmeinhalts des Arbeitsmittels A wird über den zweiten Hochdrucküberhitzer 14 und den zweiten Zwischenüberhitzer 20 auf den diese durchströmenden Dampf derart übertragen, daß die Dampftemperatur zur Erzielung eines hohen Wirkungsgrades etwa 550 °C beträgt. Das somit auf etwa 550 °C abgekühlte Arbeitsmittel A wird dann als Verbrennungsluft der zweiten Brennkammer 26 zugeführt. Die zweite Brennkammer 26 kann dabei für eine Strohfeuerung, beispielsweise durch einen Rost, vom Rauchgasbereich der ersten Brennkammer 24 abgetrennt sein.

Zusätzlich zum Arbeitsmittel A werden der zweiten Brennkammer 26 Biomasse, insbesondere Stroh, als zweiter Brennstoff S und nach Bedarf über die Luftzuführungsleitung 32 weitere Verbrennungsluft zugeführt. Der Brennstoff S wird in der zweiten Brennkammer 26 derart verbrannt, daß die dabei entstehenden Rauchgase - nach Wärmeabgabe an in den Dampferzeugerrohren 8 geführtes Wasser/Dampf-Gemisch - eine Temperatur von etwa 850 bis 880 °C aufweisen. Bei einer derartigen Temperatur ist ein Einsatz verschiedener Biomassen als Brennstoff S möglich, ohne daß eine übermäßige Heizflächenverschmutzung durch Ascheerweichung auftritt.

Ein Teil des Wärmeinhalts des Rauchgases R wird über den ersten Hochdrucküberhitzer 12, den ersten Zwischenüberhitzer 16, die Dampferzeugerrohre 8 sowie den Economizer 6 auf in diesen geführtes Wasser oder in diesen geführten Dampf übertragen. Die Dampftemperaturen übersteigen dabei 470 °C nicht, so daß eine Hochtemperaturkorrosion von Heizflächen auch bei der Verwendung von Biomasse als zweitem Brennstoff S nicht auftritt. Das Rauchgas R kühlt sich dabei auf etwa 350 °C ab. Der verbliebene Teil des Wärmeinhalts des Rauchgases R wird über den Wärmetauscher 36 zur Luftvorwärmung auf die der ersten Brennkammer 24 und/oder der zweiten Brennkammer 26 zugeführte Verbrennungsluft übertragen.

In einem derartigen Dampferzeuger 1 ist somit die Verwendung von Biomasse, insbesondere von Stroh, als Hauptbrennstoff zur Erzeugung von Dampftemperaturen bis etwa 470 °C möglich. Dabei ist die Heizflächenkorrosion gering, so daß der Dampferzeuger 1 eine besonders lange Lebensdauer aufweist. Durch die Vorschaltung der ersten Brennkammer 24 ist zudem die Erreichung von für einen hohen Wirkungsgrad besonders günstigen Dampftemperaturen von mehr als 550 °C möglich.

## Patentansprüche

1. Dampferzeuger (1) mit einer ersten Brennkammer (24) zur Erzeugung eines Arbeitsmittels (A) durch Verbrennung eines ersten Brennstoffs (K) und mit einer zweiten Brennkammer (26) zur Verbrennung eines zweiten Brennstoffs (S), wobei die zweite Brennkammer (26) in Strömungsrichtung des Arbeitsmittels (A) der ersten Brennkammer (24) nachgeschaltet ist, **dadurch gekennzeichnet**, daß eine erste Überhitzerheizfläche (12, 16) im Rauchgasbereich der zweiten Brennkammer (26) angeordnet ist, und daß eine der ersten Überhitzerheizfläche (21, 16) nachgeschaltete zweite Überhitzerheizfläche (14, 20) im Rauchgasbereich der ersten Brennkammer (24) angeordnet ist.

2. Dampferzeuger nach Anspruch 1,
**dadurch gekennzeichnet**, daß der ersten Brennkammer (24) Kohle als Brennstoff (K) zuführbar ist.

3. Dampferzeuger nach Anspruch 1 oder 2,
**dadurch gekennzeichnet**, daß der zweiten Brennkammer (26) Biomasse als Brennstoff (S) zuführbar ist.

4. Dampferzeuger nach einem der Ansprüche 1 bis 3,
**dadurch gekennzeichnet**, daß seine Außenwände (10) eine Anzahl von Dampferzeugerrohren (8) umfassen.

5. Dampferzeuger nach einem der Ansprüche 1 bis 4,
**dadurch gekennzeichnet**, daß in einer an die erste und/oder an die zweite Brennkammer (24, 26) angeschlossenen Luftzuführungsleitung (30, 32, 34) ein Wärmetauscher (36) zur Luftvorwärmung durch Wärmetausch mit bei der Verbrennung erzeugtem Rauchgas (R) angeordnet ist.

6. Verfahren zum Betreiben eines Dampferzeugers nach einem der Ansprüche 1 bis 5,
**dadurch gekennzeichnet**, daß die Temperatur des in der ersten Überhitzerheizfläche (12, 16) erzeugten Dampfes ein Maximum von etwa 470 °C nicht übersteigt.

7. Verfahren zum Betreiben eines Dampferzeugers nach Anspruch 6
**dadurch gekennzeichnet**, daß der ersten Brennkammer (24) überstöchiometrisch Verbrennungsluft zugeführt wird.

## Claims

1. Steam generator (1) having a first combustion chamber (24) for generating a working medium (A) by burning a first fuel (K) and having a second combustion chamber (26) for burning a second fuel (S), the second combustion chamber (26) being connected downstream of the first combustion chamber (24) in the direction of flow of the working medium (A), characterized in that a first superheater heating area (12, 16) is arranged in the flue-gas region of the second combustion chamber (26), and in that a second superheater heating area (14, 20) connected downstream of the first superheater heating area (21, 16) is arranged in the flue-gas region of the first combustion chamber (24).

2. Steam generator according to Claim 1, characterized in that coal can be fed as fuel (K) to the first combustion chamber (24).

3. Steam generator according to Claim 1 or 2, characterized in that biomass can be fed as fuel (S) to the second combustion chamber (26).

4. Steam generator according to one of Claims 1 to 3, characterized in that its outer walls (10) contain a number of steam-generator tubes (8).

5. Steam generator according to one of Claims 1 to 4, characterized in that a heat exchanger (36) for preheating air by heat exchange with flue gas (R) generated during the combustion is arranged in an air-supply line (30, 32, 34) connected to the first and/or to the second combustion chamber (24, 26).

6. Method of operating a steam generator according to one of Claims 1 to 5, characterized in that the temperature of the steam generated in the first superheater heating area (12, 16) does not exceed a maximum of about 470 °C.

7. Method of operating a steam generator according to Claim 6, characterized in that combustion air is fed to the first combustion chamber (24) superstoichiometrically.

## Revendications

1. Générateur (1) de vapeur comportant une première chambre (24) de combustion pour produire un agent (A) de travail par combustion d'un premier combustible (K) et comportant une deuxième chambre (26) de combustion pour la combustion d'un deuxième combustible (S), la deuxième chambre (26) de combustion étant montée en aval de la première chambre (24) de combustion dans le sens d'écoulement de l'agent (A) de travail, caractérisé en ce qu'une surface (12, 16) chauffante de surchauffeur est montée dans la zone des gaz de fumée de la deuxième chambre (26) de combustion et en ce qu'une deuxième surface (14, 20) chauffante de surchauffeur, montée en aval de la première surface (21, 16) chauffante de surchauffeur, est montée dans la zone des gaz de fumée de la première chambre (24) de combustion.

2. Générateur de vapeur suivant la revendication 1, caractérisé en ce que l'on peut envoyer comme combustible (K) du charbon à la première chambre (24) de combustion.

3. Générateur de vapeur suivant la revendication 1 ou 2, caractérisé en ce que l'on peut envoyer comme combustible (S) de la biomasse à la deuxième chambre (26) de combustion.

4. Générateur de vapeur suivant l'une des revendications 1 à 3, caractérisé en ce que ses parois (10) extérieures comportent une pluralité de tubes (8) générateurs de vapeur.

5. Générateur de vapeur suivant l'une des revendications 1 à 4, caractérisé en ce qu'il est monté dans une conduite (30, 32, 34) d'envoi d'air raccordée à la première et/ou à la deuxième chambre (24, 26) de combustion un échangeur (36) de chaleur pour préchauffer l'air par échange de chaleur avec du gaz (R) de fumée produit lors de la combustion.

6. Procédé pour faire fonctionner un générateur de vapeur suivant l'une des revendications 1 à 5, caractérisé en ce que la température de la vapeur produite dans la première surface (12, 16) chauffante de surchauffeur n'est pas supérieure à un maximum d'environ 470°C.

7. Procédé pour faire fonctionner un générateur de vapeur suivant la revendication 6, caractérisé en ce que l'air de combustion est envoyé à la première chambre (24) de combustion dans une proportion supérieure à la proportion stoechiométrique.
